# EUROPEAN PATENT SPECIFICATION

(11) **EP 1 349 340 B1**
(45) Date of publication and mention of the grant of the patent: **11.04.2012**
(21) Application number: 02025643.4
(22) Date of filing: 19.11.2002
(51) Int. Cl.: H04L 29/06, H04L 12/28

(54) **Method for controlling a home appliance networking system**
Verfahren zur Steuerung eines Hausgeräte-Netzwerksystems
Méthode pour contrôler un système de réseau d'appareils domestiques

(30) Priority: 15.03.2002 KR 2002014160
(43) Date of publication of application: 01.10.2003
(73) Proprietor: LG Electronics Inc., Seoul 150-010 (KR)
(72) Inventor: Youn, Sang Chul, Koyang-si 411-410, Kyungki-do (KR); Jeon, Duck Goo, Seoul 133-070 (KR)
(74) Representative: TER MEER - STEINMEISTER & PARTNER GbR

(56) References cited:
- WO-A-01/31852
- US-A- 6 006 272
- US-A- 6 085 236
- ABOBA B: "The Mini-DHCP server" IETF - INTERNET DRAFT, 4 October 2000 (2000-10-04), XP002168115

## Description

### BACKGROUND OF THE INVENTION

### Field of the Invention

The present invention relates to home appliance networking systems and methods for controlling the same, and more particularly to a home appliance networking system and a method for controlling the same, wherein private Internet protocol (IP) addresses or port numbers are assigned respectively to a plurality of home appliances in a home networking system so that the home appliances can transmit and receive data to/from a network through the assigned private IP addresses or port numbers, thereby making it possible to construct the home networking system in a simpler manner and curtail costs required for the system construction.

### Description of the Related Art

A home appliance networking system has recently been highlighted in which a plurality of home appliances are interconnected via an internal network of a home and the internal network is connected to an external Internet network, thereby enabling a user to control the home appliances from anywhere inside and outside of the home.

In the home appliance networking system, particularly, the user can not only recognize state information of a specific home appliance at any place inside of the home, but also control the specific home appliance through the use of control means, such as a computer, at any place outside of the home. In this regard, the home appliance networking system has obtained favorable responses from many consumers, and thus has become more widespread in its application day by day.

However, the above-mentioned home appliance networking system has a disadvantage in that a local area network (LAN) must be constructed in the home or building to interconnect the home appliances via the internal network of the home and control the interconnected appliances in an integrated manner, resulting in a great cost being incurred.

Moreover, in order to connect the home appliances to the internal network of the home and transmit and receive control and state information between the home appliances and the internal network, a high-price LAN card and a communication processable central processing unit (CPU) of the personal computer (PC) class must be installed in each of the home appliances.

However, it is the current reality that the installation of the LAN cards and PC-class CPUs in the respective home appliances raises manufacturing costs of the respective appliances, reducing their market competitiveness. Furthermore, new production lines are required to install PC-class CPUs and LAN cards of new models in the home appliances. As a result, costs required for construction of the new production lines raise the prices of the home appliances still more.

Besides, the installation of the LAN cards and PC-class CPUs in the respective home appliances increases the costs of certain ones of the appliances not requiring the control through the internal network, and in turn results in wasting of resources.

ABOBA B: "The Mini-DHCP server" IETF - INTERNET DRAFT, 4 October 2000 (2000-10-04), XP002168115 discloses a mini-DHCP server, which provides DHCP server functionality. The mini-DHCP server configures itself to serve addresses out of the 192.186/16 scope with /24 prefixes allocated to each interface. The Internet service provider uses private address space internally in order to manage network devices.

US-A-6 006 272 describes method for translating non internet unique addresses of a home network device to an internet unique address for internet communication through a router. Every device within a given home network is assigned three addresses:(i) a configured address identical to the network address of the router enabling access to an Internet; (ii) a logical address visible only to the other devices in the same home network; and (iii) a medium access control ("MAC") address.

US-A-6 085 236 describes a method and system for providing seamless interoperability and integration between a plurality of devices in a network using a common protocol, wherein at least one of the devices is a legacy device which commmunicates with the network using a proprietary protocol.

EP-1-063-829 describes a gateway, which realizes a connection between a network where HAVi devices are hooked up and another network in accordance with a Play-and-Plug spec. (e.g. the internet protocol (IP)) other than the HAVi spec. An HAVi plug-in detector detects a plug-in of a device to the HAVi network. A virtual device functions as a gateway for accessing from a device plugged-in the IP network to the device plugged-in the HAVi network. A virtual device controller provides the virtual device with an IP identifier for accessing to the virtual device from the IP network, and turns the virtual device to a standby status waiting for connection.

### SUMMARY OF THE INVENTION

Therefore, the present invention has been made in view of the above problems, and it is an object of the present invention to provide a home appliance networking system and a method for controlling the same, wherein an IP sharing unit is provided to assign private IP addresses or port numbers respectively to a plurality of home appliances in a home networking system, and a plurality of communication processors are provided to enable corresponding ones of the home appliances to transmit and receive data to/from a network through the private IP addresses or port numbers assigned by the IP sharing unit, thereby making it possible to operate the home networking system more simply and efficiently.

The object is solved by the features of the independent claims.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a block diagram showing the construction of a preferred embodiment of a home appliance networking system in accordance with the present invention;
Fig. 2 is a block diagram showing the construction of an alternative embodiment of the home appliance networking system in accordance with the present invention;
Fig. 3 is a block diagram of a first-type communication processor in the home appliance networking system in accordance with the present invention;
Fig. 4 is a block diagram of a second-type communication processor in the home appliance networking system in accordance with the present invention; and
Fig. 5 is a flow chart illustrating a method for controlling the home appliance networking system in accordance with the present invention.

### DESCRIPTION OF THE PREFERRED EMBODIMENTS

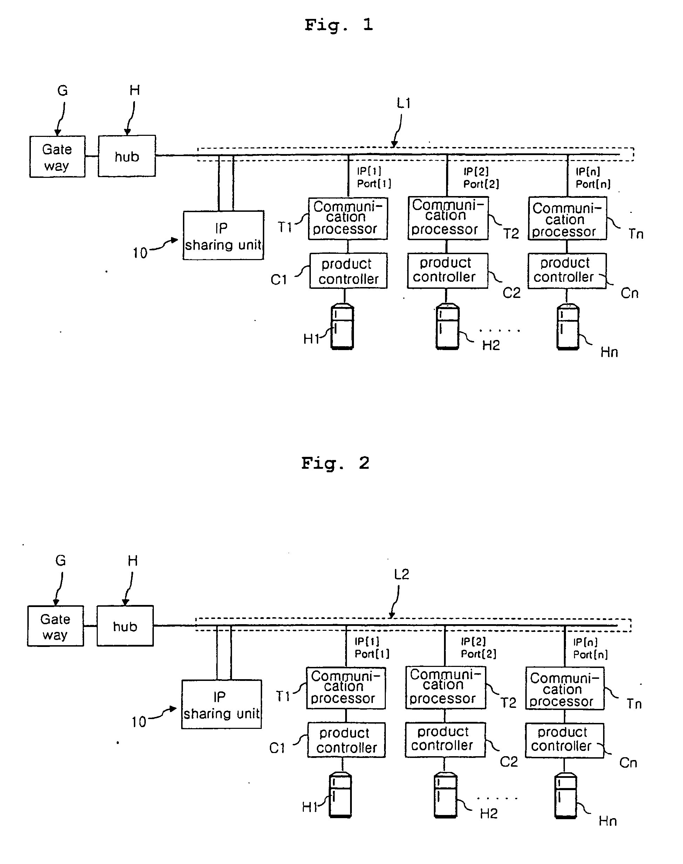

With reference to Fig. 1, there is shown in block form the construction of a preferred embodiment of a home appliance networking system in accordance with the present invention. As shown in this drawing, the home appliance networking system comprises an existing LAN L1, which is an internal network of a home networking system constructed in a home or building, networking equipment for connecting the internal network of the home networking system to an external network of the home networking system, an IP sharing unit 10 assigned a public IP address for enabling a user to gain access to the internal network from the external network through the networking equipment, and a plurality of communication processors T1-Tn connected respectively to product controllers C1-Cn of a plurality of home appliances H1-Hn for enabling corresponding ones of the home appliances to be assigned private IP addresses from the IP sharing unit 10 and transmit and receive data to/from the internal network using the assigned private IP addresses, respectively.

The IP sharing unit 10 preferably sets and assigns unique private IP addresses respectively to the plurality of home appliances H1-Hn. Alternatively, the IP sharing unit 10 may assign the same private IP addresses with different port numbers respectively to the plurality of home appliances H1-Hn. Further, the IP sharing unit 10 preferably maps the private IP addresses or port numbers assigned respectively to the plurality of home appliances H1-Hn, to the home appliances H1-Hn and stores the resulting map information. As a result, a control command from the external network is transmitted to a private IP address or port number of a corresponding home appliance on the basis of the map information stored in the IP sharing unit 10.

The private IP addresses or port numbers assigned respectively to the home appliances by the IP sharing unit 10 are stored respectively in the plurality of communication processors T1-Tn connected respectively to the product controllers of the home appliances. After storing the private IP addresses or port numbers assigned by the IP sharing unit 10, the communication processors T1-Tn send only data associated with the corresponding home appliances with the stored private IP addresses or port numbers to the product controllers C1-Cn, respectively. Thus, the plurality of home appliances H1-Hn are controllable according to only the associated data.

The networking equipment includes a gateway G acting as an ingress of the internal network of the home networking system, and a hub H for receiving data from the external network via the gateway G, sending the received data to the IP sharing unit 10, receiving data from the IP sharing unit 10 and sending the received data to the external network via the gateway G.

As shown in Fig. 1, the IP sharing unit 10 and the plurality of home appliances H1-Hn are connected to the existing LAN in such a manner that an internal data line to the internal network and an external data line to the external network are physically interconnected via the IP sharing unit 10. As a result, data transmitted and received via the IP sharing unit 10 must be passed through the IP sharing unit 10 as shown in Fig. 1.

Alternatively, the IP sharing unit 10 may transmit and receive data over an internal network, which is a newly constructed LAN L2 as shown in Fig. 2, not the existing LAN L1. In this case, the internal data line to the internal network and the external data line to the external network are separated from each other on the IP sharing unit 10 as shown in Fig. 2.

In a similar manner to that in the home appliance networking system shown in Fig. 1, in the home appliance networking system of the present invention shown in Fig. 2, the IP sharing unit 10 has a public IP address assigned thereto, and sets and assigns private IP addresses or port numbers to the plurality of home appliances H1-Hn.

Accordingly, the user can access the IP sharing unit 10 from the external network using the public IP address of the IP sharing unit 10. The IP sharing unit 10 is further adapted to assign the private IP addresses or port numbers to the plurality of home appliances H1-Hn and control the flow of data to the assigned private IP addresses or port numbers. Therefore, the home networking system is controllable through the IP sharing unit 10.

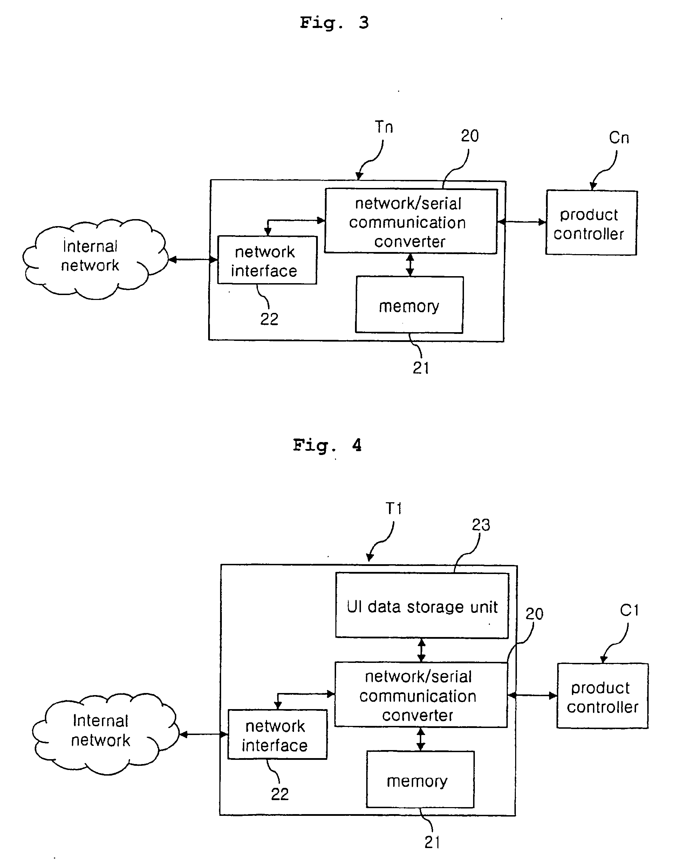

Fig. 3 shows an internal structure of a first-type communication processor in the home appliance networking system in accordance with the present invention, namely, the communication processor Tn connected to the product controller Cn of the nth one Hn of the plurality of home appliances H1-Hn.

As shown in Fig. 3, the first-type communication processor Tn according to the present invention includes a network/serial communication converter 20 for converting the format of data appropriately to standards of the internal network and product controller Cn such that the corresponding home appliance Hn transmits and receives the data to/from the internal network, and a memory 21 for storing the private IP address or port number assigned to the corresponding home appliance Hn by the IP sharing unit 10. The memory 21 is preferably a read only memory (ROM).

The first-type communication processor Tn further includes a network interface 22 for transferring data, outputted from the product controller Cn and then format-converted appropriately to the standard of the internal network by the network/serial communication converter 20, to the internal network, and transferring data associated with the corresponding home appliance Hn from the internal network to the network/serial communication converter 20.

The network/serial communication converter 20 preferably transmits and receives data to/from the product controller Cn in a UART standard-based serial communication manner. The network/serial communication converter 20 transmits and receives data to/from the network interface 22 in a network communication manner to transmit and receive the data to/from the internal network.

As an alternative, data format-converted appropriately to the standard of the internal network by the network/serial communication converter 20 may be transferred directly to the internal network, not via the network interface 22, and data from the internal network may also be transferred directly to the network/serial communication converter 20, not via the network interface 22. That is, the function of the network interface 22 may be included in the network/serial communication converter 20.

Fig. 4 shows an internal structure of a second-type communication processor in the home appliance networking system in accordance with the present invention, namely, the communication processor T1 connected to the product controller C1 of a specific one, for example, H1 of the plurality of home appliances H1-Hn. As shown in Fig. 4, in a different manner from that of Fig. 3, the second-type communication processor T1 further includes, in addition to the network/serial communication converter 20, memory 21 and network interface 22, a user interface (UI) data storage unit 23 for storing UI data for execution of a UI program appropriate to the control of the plurality of home appliances H1-Hn connected to the internal network.

The UI data stored in the UI data storage unit 23 is preferably sent to an external computing device (not shown) which accesses the IP sharing unit 10 over the external network to send control commands to the plurality of home appliances of the home networking system, or to an internal computing device (not shown) which sends control commands to the plurality of home appliances over the internal network.

The external or internal computing device executes the UI program in response to the UI data sent thereto, so the user can input desired control commands to the plurality of home appliances through the executed UI program using the external or internal computing device. The inputted control commands are sent to home appliances with corresponding private IP addresses or port numbers via the IP sharing unit 10.

The second-type communication processor T1 further includes an internal network controller (not shown) for managing transmission and reception of data over the internal network by the plurality of home appliances. Namely, the second-type communication processor T1 may also function as network management means for managing transmission and reception of data by the home networking system.

In brief, the home appliance networking system of one home networking system can comprise the second-type communication processor T1 connected to one IP sharing unit 10 and the product controller C1 of one home appliance H1, and the first-type communication processors T2-Tn connected respectively to the product controllers C2-Cn of the other home appliances H2-Hn. Therefore, the UI data storage unit is contained in only one communication processor of the home appliance networking system, which acts as the network management means for performing the function of the internal network controller. Consequently, the home appliance networking system can be efficiently operated with no need to provide the UI data storage unit in a plurality of communication processors or allow them to perform the function of the internal network controller.

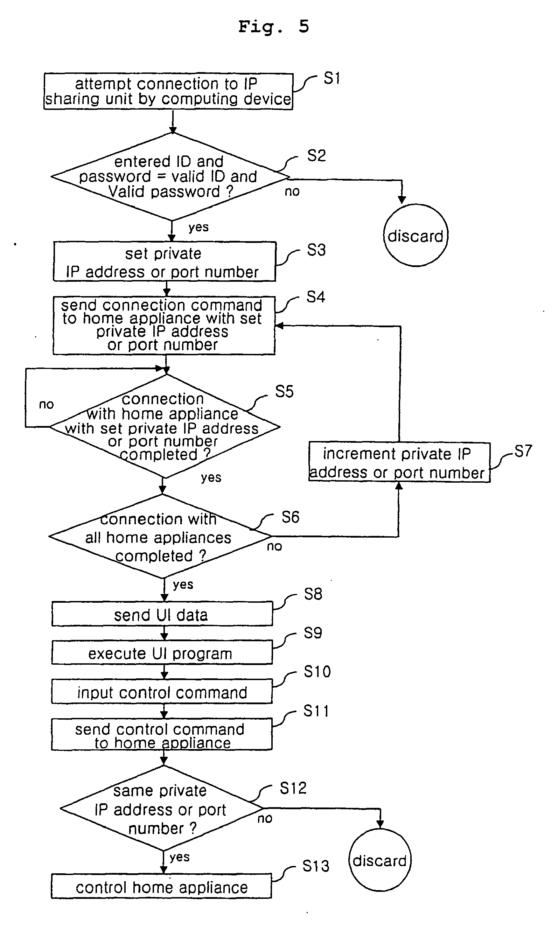

Fig. 5 is a flow chart illustrating a method for controlling the home appliance networking system in accordance with the present invention.

As shown in Fig. 5, at the first step S1, a computing device attempts a connection to an IP sharing unit assigned a public IP address. At this time, the computing device sends an identification (ID) and password entered by a user to the IP sharing unit while attempting the connection thereto.

At the second step S2, the IP sharing unit determines whether the ID and password sent from the computing device are the same as a valid ID and valid password stored therein.

If the ID and password sent from the computing device are determined to be the same as the valid ID and valid password at the second step S2, the IP sharing unit sets a private IP address or port number of a home appliance to be connected, among a plurality of home appliances connected to an internal network at the third step S3. Note that the IP sharing unit has previously assigned private IP addresses or port numbers respectively to the plurality of home appliances.

At the fourth step S4, the IP sharing unit sends a connection command to the home appliance with the private IP address or port number set at the third step S3.

At the fifth step S5, the IP sharing unit determines whether its connection with the home appliance to which the connection command has been sent at the fourth step S4 has been completed.

Upon determining at the fifth step S5 that the home appliance connection has been completed, the IP sharing unit determines at the sixth step S6 whether its connection with all the home appliances connected to the internal network has been completed. At this time, because the IP sharing unit stores information regarding the private IP addresses or port numbers of all the home appliances connected to the internal network, it can determine on the basis of the stored information whether its connection with all the home appliances has been completed. On the other hand, if it is determined at the fifth step S5 that the home appliance connection has not been completed, the IP sharing unit returns to the fifth step S5 to again determine whether the home appliance connection has been completed.

In the case where it is determined at the sixth step S6 that the connection with all the home appliances has not been completed, the IP sharing unit increments the private IP address or port number set at the third step S3 by one at the seventh step S7 and then returns to the fourth step S4.

However, if it is determined at the sixth step S6 that the connection with all the home appliances has been completed, a second-type communication processor sends, at the eighth step S8, UI data to the computing device that has attempted the connection to the IP sharing unit at the first step S1.

At the ninth step S9, the computing device executes a UI program in response to the UI data sent thereto.

At the tenth step S10, the user inputs a control command through the UI program executed by the computing device.

At the eleventh step S11, the computing device sends the control command inputted through the UI program to the IP sharing unit, which then transfers the sent control command to a private IP address or port number of a corresponding home appliance.

At the twelfth step S12, a communication processor of the corresponding home appliance determines whether a private IP address or port number of the control command transferred at the eleventh step S11 is the same as the private IP address or port number of the corresponding home appliance.

If the private IP address or port number of the transferred control command is determined to be the same as the private IP address or port number of the corresponding home appliance at the twelfth step S12, the communication processor of the corresponding home appliance sends the transferred control command to the corresponding home appliance, which is then controlled according to that control command.

On the other hand, in the case where it is determined at the twelfth step S12 that the private IP address or port number of the transferred control command is not the same as the private IP address or port number of the corresponding home appliance, the communication processor of the corresponding home appliance discards the transferred control command.

As apparent from the above description, the present invention provides a home appliance networking system and a method for controlling the same, wherein an IP sharing unit assigns private IP addresses or port numbers respectively to a plurality of home appliances in a home networking system and is assigned a public IP address so that the home networking system can be accessed from an external network, and a plurality of communication processors are connected respectively to product controllers of the home appliances to store corresponding ones of the private IP addresses or port numbers assigned by the IP sharing unit and enable corresponding ones of the home appliances to transmit and receive data to/from an internal network of the home networking system through the corresponding private IP addresses or port numbers. Therefore, the home appliance networking system can be constructed in a simpler manner and at a lower cost to operate the home networking system efficiently.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A home appliance networking system comprising:
networking means (G, H) for connecting an internal network (L1, L2) of a home networking system to an external network of said home networking system;
Internet protocol (IP) sharing means (10) assigned a public IP address for enabling a user to gain access to said home networking system from said external network;
a plurality of communication processors (T1-Tn) connected respectively to product controllers (C1- Cn) of a plurality of home appliances (H1-Hn) for enabling corresponding ones of said home appliances to be assigned private IP addresses or port numbers from said IP sharing means (10) and transmit and receive data to/from said internal network using the assigned private IP addresses or port numbers, respectively,
**characterised by** :
wherein each of said communication processors (T1-Tn) includes:
a network/serial communication converter (20) for converting a format of data appropriately to UART standard-based serial communications standards of said internal network and said product controller (C1-Cn) of said corresponding home appliance (H1-Hn) such that said corresponding home appliance transmits and receives the data to/from said internal network; and
a memory (21) for storing said private IP address or port number assigned to said corresponding home appliance (H1-Hn) by said IP sharing means (10);
a network interface (22) for transferring data format-converted appropriately to said standard of said internal network by said network/serial communication converter (20), to said internal network, and transferring data associated with said corresponding home appliance (H1-Hn) from said internal network to said network/serial communication converter (20):
a user interface run data storage unit (23) for storing UI data, wherein said user interface (UI) data storage unit (23) is adapted to send the stored UI data to an internal computing device, said internal computing device being connected to said internal network to send control commands to said plurality of home appliances, and executing said UI program in response to said UI data sent thereto so that said control commands can be inputted through said internal computing device.

2. The home appliance networking system as set forth in claim 1, wherein said networking means includes:
a gateway (G) acting as an ingress of said internal network; and
a hub (H) for transmitting and receiving data between said gateway (G) and said IP sharing means (10).

3. The home appliance networking system as set forth in claim 1, wherein said communication processors (T1-Tn) are adapted to continuously exchange data with said product controllers (C1-Cn) to determine whether said corresponding home appliances (H1-Hn) are normally operated.

4. The home appliance networking system as set forth in claim 1, wherein said memory (21) is a read only memory.

5. The home appliance networking system as set forth in claim 1, wherein each of said communication processors (T1-Tn) further includes a network interface (22) for transferring data, outputted from said product controller (C1-Cn) of said corresponding home appliance (H1-Hn) and then format-converted appropriately to said standard of said internal network by said network/serial communication converter (20), to said internal network, and transferring data associated with said corresponding home appliance (H1-Hn) from said internal network to said network/serial communication converter (20).

6. The home appliance networking system as set forth in claim 5, wherein each of said communication processors (T1-Tn) further includes an internal network controller for managing transmission and reception of data over said internal network by said plurality of home appliances (H1-Hn).

7. The home appliance networking system as set forth in claim 5, wherein the user interface (UI) data storage unit (23) is adapted to store UI data for execution of a UI program appropriate to the control of said plurality of home appliances (H1-Hn) connected to said internal network.

8. The home appliance networking system as set forth in claim 7, wherein said UI data storage unit (23) is adapted to send the stored UI data to an external computing device, said external computing device accessing said IP sharing means (10) over said external network to control said home appliances (H1-Hn) connected to said internal network, and executing said UI program in response to said UI data sent thereto so that control commands can be inputted through said external computing device.

9. A method for controlling a home appliance networking system, comprising the steps of:
a) assigning a public IP address to IP sharing means (10), said IP sharing means (10) assigning private IP addresses or port numbers respectively to a plurality of home appliances (H1-Hn) connected to an internal network of a home networking system;
b) connecting (S1) a computing device to said IP sharing means (10) to allow said computing device to input a control command to a specific one of said plurality of home appliances connected to said internal network;
c) connecting (S5, S6, S7) said IP sharing means (10) to said plurality of home appliances (H1-Hn) connected to said internal network as said computing device is connected to said IP sharing means (10) at said step b);
**characterised by**:
d) transferring (S8) UI data to the computing device, said computing device executing (S9) UI program in response to UI data sent thereto, inputting (S10) said control command through said UI program executed by said computing device to one of said plurality of home appliances with said private IP addresses or port numbers assigned by said IP sharing means (10) connected at said step c); and
e) controlling (S13) a corresponding one of said home appliances (H1-Hn) in response to said control command inputted at said step d) when the private IP address or port number of the transferred control command is the same (S12) as the private IP address or port number of the corresponding home appliance.

10. The method as set forth in claim 9, further comprising the step of:
f) allowing said IP sharing means (10) to assign said private IP addresses or port numbers respectively to said plurality of home appliances (H1-Hn) before said step b) is performed.

11. The method as set forth in claim 9, wherein said step b) includes the steps of:
b-1) allowing said computing device to access said IP sharing means (10) using said public IP address assigned thereto;
b-2) determining (S2) whether an identification (ID) and password entered through said computing device while accessing said IP sharing means (10) are valid; and
b-3) connecting said computing device to said IP sharing means (10) if it is determined at said step b-2) that the entered ID and password are valid.

12. The method as set forth in claim 9, wherein said step c) includes the steps of:
c-1) allowing said IP sharing means (10) to set a private IP address or port number of a home appliance (H1-Hn) to be connected, among said private IP addresses or port numbers assigned to said plurality of home appliances;
c-2) connecting said IP sharing means (10) to said home appliance with said private IP address or port number set at said step c-1); and
c-3) determining (S6) whether said IP sharing means (10) has been connected to all said plurality of home appliances (H1-Hn) connected to said internal network and, if said IP sharing means (10) has not been connected to all said plurality of home appliances connected to said internal network, incrementing said private IP address or port number set at said step c-1) by one and then returning to said step c-2).

13. The method as set forth in claim 9, further comprising, after said step b) and before said step d), the steps of:
f) storing UI data for execution of a UI program in a communication processor (T1) and sending (S8) the stored UI data to said computing device connected at said step b), said UI program being executed (S9) to input (S10) said control command to said plurality of home appliances, said communication processor (T1) transmitting and receiving data between said internal network and said home appliances; and
g) allowing said computing device to execute said UI program in response to said UI data sent thereto.

## Patentansprüche

1. Vernetzungssystem für Haushaltsgeräte, das Folgendes umfasst:
Vernetzungsmittel (G, H) zum Verbinden eines internen Netzes (L1, L2) eines Heimvernetzungssystems mit einem externen Netz des Heimvemetzungssystems;
Internetprotokoll-Zugriffsmittel (IP-Zugriffsmittel) (10), denen eine öffentliche IP-Adresse zugewiesen ist, die es einem Anwender ermöglicht, vom externen Netz aus Zugang zum Heimvernetzungssystem zu erhalten;
mehrere Kommunikationsprozessoren (T1-Tn), die mit den jeweiligen Produktsteuereinheiten (C1-Cn) von mehreren Haushaltsgeräten (H1-Hn) verbunden sind, um zu ermöglichen, dass den jeweils zugehörigen Haushaltsgeräten private IP-Adressen und Portnummern von den IP-Zugriffsmitteln (10) zugewiesen werden können und dass sie Daten zum/vom internen Netz senden und empfangen können, indem sie die zugewiesenen privaten IP-Adressen bzw. Portnummern verwenden,
**dadurch gekennzeichnet, dass**
jeder der Kommunikationsprozessoren (T1-Tn) umfasst:
einen Netz/Seriell-Kommunikationskonverter (20) zum Konvertieren eines Datenformats gemäß den UART-Standard-basierten seriellen Kommunikationsstandards des internen Netzes und der Produktsteuereinheit (C1-Cn) des entsprechenden Haushaltsgeräts (H1-Hn), so dass das entsprechende Haushaltsgerät Daten zum/vom internen Netz sendet und empfängt; und
einen Speicher (21) zum Speichern der privaten IP-Adresse oder Portnummer, die dem entsprechenden Haushaltsgerät (H1-Hn) von den IP-Zugriffsmitteln (10) zugewiesen werden;
eine Netzschnittstelle (22) zum Übertragen der durch den Netz/Seriell-Kommunikationskonverter (20) gemäß dem Standard des internen Netzes format-konvertierten Daten zum internen Netz und zum Übertragen der Daten, die im Zusammenhang mit den entsprechenden Haushaltsgeräten (H1-Hn) stehen, vom internen Netz zum Netz/Seriell-Kommunikationskonverter (20);
eine Datenspeichereinheit (23) für die Anwenderschnittstelle (UI) zum Speichern von UI-Daten, wobei die Datenspeichereinheit (23) für die Anwenderschnittstelle (UI) geeignet ist, um die gespeicherten UI-Daten zu einer internen Datenverarbeitungsvorrichtung zu senden, wobei die interne Datenverarbeitungsvorrichtung mit dem internen Netz verbunden ist, um in Reaktion auf die UI-Daten, die zu ihr gesendet werden, Steuerbefehle zu den mehreren Haushaltsgeräten zu senden und das UI-Programm auszuführen, so dass die Steuerbefehle durch die Datenverarbeitungsvorrichtung eingegeben werden können.

2. Vernetzungssystem für Haushaltsgeräte nach Anspruch 1, wobei die Vernetzungsmittel umfassen:
einen Netzübergang (G), der als Zugang des internen Netzes fungiert; und
einen Hub (H) zum Senden und Empfangen von Daten zwischen dem Netzübergang (G) und den IP-Zugriffsmitteln (10).

3. Vernetzungssystem für Haushaltsgeräte nach Anspruch 1, wobei die Kommunikationsprozessoren (T1-Tn) geeignet sind, kontinuierlich Daten mit den Produktsteuereinheiten (C1-Cn) auszutauschen, um festzustellen, ob die entsprechenden Haushaltsgeräte (H1-Hn) normal betrieben werden.

4. Vernetzungssystem für Haushaltsgeräte nach Anspruch 1, wobei der Speicher (21) ein Festwertspeicher ist.

5. Vernetzungssystem für Haushaltsgeräte nach Anspruch 1, wobei jeder der Kommunikationsprozessoren (T1-Tn) ferner eine Netzschnittstelle (22) zum Übertragen von Daten, die von der Produktsteuereinheit (C1-Cn) des entsprechenden Haushaltsgeräts (H1-Hn) ausgegeben und dann durch den Netz/Seriell-Kommunikationskonverter (20) gemäß dem Standard des internen Netzes format-konvertiert werden, zum internen Netz und zum Übertragen von Daten, die im Zusammenhang mit den entsprechenden Haushaltsgeräten (H1-Hn) stehen, vom internen Netz zum Netz/Seriell-Kommunikationskonverter (20), umfasst.

6. Vernetzungssystem für Haushaltsgeräte nach Anspruch 5, wobei jeder der Kommunikationsprozessoren (T1-Tn) ferner eine interne Netzsteuereinheit zum Verwalten des Sendens und Empfangens von Daten über das interne Netz durch die mehreren Haushaltsgeräte (H1-Hn) umfasst.

7. Vernetzungssystem für Haushaltsgeräte nach Anspruch 5, wobei die Datenspeichereinheit (23) für die Anwenderschnittstelle (UI) dazu ausgelegt ist, UI-Daten für das Ausführen eines UI-Programms, das zum Steuern der mehreren Haushaltsgeräte (H1-Hn), die mit dem internen Netz verbunden sind, ausgelegt ist, zu speichern.

8. Vernetzungssystem für Haushaltsgeräte nach Anspruch 7, wobei die UI-Datenspeichereinheit (23) dazu ausgelegt ist, die gespeicherten UI-Daten zu einer externen Datenverarbeitungsvorrichtung zu senden, wobei die externe Datenverarbeitungsvorrichtung auf die IP-Zugriffsmittel (10) über das externe Netz zugreift, um in Reaktion auf die UI-Daten, die zu ihr gesendet werden, die Haushaltsgeräte (H1-Hn), die mit dem internen Netz verbunden sind, zu steuern und das UI-Programm auszuführen so dass Steuerbefehle durch die externe Datenverarbeitungsvorrichtung eingegeben werden können.

9. Verfahren zum Steuern eines Vernetzungssystems für Haushaltsgeräte, das folgende Schritte umfasst:
a) Zuweisen einer öffentlichen IP-Adresse an die IP-Zugriffsmittel (10), Zuweisen privater IP-Adressen bzw. Portnummern durch die IP-Zugriffsmittel (10) an die mehreren Haushaltsgeräte (H1-Hn), die mit einem internen Netz eines Heimvernetzungssystem verbunden sind;
b) Verbinden (S1) einer Datenverarbeitungsvorrichtung mit den IP-Zugriffsmitteln (10), um der Datenverarbeitungsvorrichtung zu ermöglichen, einen Steuerbefehl zu einem bestimmten der mehreren Haushaltsgeräte, die mit dem internen Netz verbunden sind, einzugeben;
c) Verbinden (S5, S6, S7) der IP-Zugriffsmittel (10) mit den mehreren Haushaltsgeräten (H1-Hn), die mit dem internen Netz verbunden sind, wenn die Datenverarbeitungsvorrichtung mit den IP-Zugriffsmitteln in Schritt b) verbunden wird,
**gekennzeichnet durch**
d) Übertragen (S8) der UI-Daten zur Datenverarbeitungsvorrichtung, wobei die Datenverarbeitungsvorrichtung in Reaktion auf die UI-Daten, die zu ihr gesendet wurden, ein UI-Programm ausführt, Eingeben (S10) des Steuerbefehle durch das UI-Programm, das von der Datenverarbeitungsvorrichtung ausgeführt wird, zu einem der mehreren Haushaltsgeräte mit privaten IP-Adressen oder Portnummern, die von den IP-Zugriffsmitteln zugewiesen wurden, die in Schritt c) verbunden wurden; und
e) Steuern (S13) eines entsprechenden der Haushaltsgeräte (H1-Hn) in Reaktion auf den Steuerbefehl, der im Schritt d) eingegeben wurde, wenn die private IP-Adresse oder Portnummer des übertragenen Steuerbefehls die gleiche (S12) ist wie die private IP-Adresse oder Portnummer des entsprechenden Haushaltsgeräts.

10. Verfahren nach Anspruch 9, das ferner den folgenden Schritt umfasst:
f) Ermöglichen, dass die IP-Zugriffsmittel (10) private IP-Adressen bzw. Portnummern den mehreren Haushaltsgeräten (H1-Hn) zuweisen, bevor der Schritt b) ausgeführt wird.

11. Verfahren nach Anspruch 9, wobei der Schritt b) folgende Schritte umfasst:
b-1) Ermöglichen, dass die Datenverarbeitungsvorrichtung auf die IP-Zugriffsmittel zugreifen kann, indem sie die dieser zugewiesene öffentliche IP-Adresse verwendet;
b-2) Feststellen (S2), ob eine Kennung (ID) und Passwort, die durch die Datenverarbeitungsvorrichtung eingegeben wurden, während sie auf die IP-Zugriffsmittel (10) zugreift, gültig sind; und
b-3) Verbinden der Datenverarbeitungsvorrichtung mit den IP-Zugriffsmitteln (10) wenn in Schritt b-2) festgestellt wird, dass die eingegebene ID und das eingegebene Passwort gültig sind.

12. Verfahren nach Anspruch 9, wobei der Schritt c) folgende Schritte umfasst:
c-1) Ermöglichen, dass die IP-Zugriffsmittel (10) eine private IP-Adresse oder Portnummer eines Haushaltsgeräts (H1-Hn) das verbunden werden soll, aus den privaten IP-Adressen oder Portnummern, die den mehreren Haushaltsgeräten zugewiesen sind, festlegt;
c-2) Verbinden der IP-Zugriffsmittel (10) mit dem Haushaltsgerät mit der privaten IP-Adresse oder Portnummer, die in Schritt c-1) festgelegt wurde; und
c-3) Bestimmen (S6), ob die IP-Zugriffsmittel (10) mit allen der mehreren Haushaltsgeräte (H1-Hn), die mit dem internen Netz verbunden sind, verbunden sind, und dann, wenn die IP-Zugriffsmittel (10) nicht mit allen der mehreren Haushaltsgeräte, die mit dem internen Netz verbunden sind, verbunden sind, Erhöhen der privaten IP-Adresse oder Portnummer, die im Schritt c-1) festgelegt wurde, um eins und Zurückkehren zu Schritt c-2).

13. Verfahren nach Anspruch 9, das ferner nach Schritt b) und vor Schritt d) die folgenden Schritte umfasst:
f) Speichern der UI-Daten für das Ausführen eines UI-Proramms in einem Kommunikationsprozessor (T1) und Senden (S8) der gespeicherten UI-Daten zur Datenverarbeitungsvorrichtung, die in Schritt b) verbunden wurde, wobei das UI-Proramm ausgeführt wird (S9), um den Steuerbefehl in die mehreren Haushaltsgeräte einzugeben (S10), und der Kommunikationsprozessor (T1) Daten zwischen dem internen Netz und den Haushaltsgeräten sendet und empfängt; und
g) Ermöglichen, dass die Datenverarbeitungsvorrichtung das UI-Programm in Reaktion auf die UI-Daten, die zu ihr gesendet werden, ausführt.

## Revendications

1. Système de mise en réseau d'appareils domestiques, comprenant :
des moyens de mise en réseau (G, H) pour connecter un réseau interne (L1, L2) d'un système de réseau domestique à un réseau externe dudit système de réseau domestique ;
des moyens de partage (10) de protocole Internet (IP) attribuant une adresse IP publique pour permettre à un utilisateur d'avoir accès audit système de réseau domestique depuis ledit réseau externe ;
une pluralité de processeurs de communication (T1-Tn) connectés respectivement à des contrôleurs de produits (C1-Cn) d'une pluralité d'appareils domestiques (H1-Rn) pour permettre à des appareils correspondants desdits appareils domestiques de se voir attribuer des adresses IP privées ou des numéros de ports depuis lesdits moyens de partage (10) IP et de transmettre et recevoir des données vers/depuis ledit réseau interne en utilisant les adresses IP privées attribuées ou les numéros de ports attribués, respectivement,
**caractérisé en ce que** :
chacun desdits processeurs de communication (T1-Tn) inclut :
un convertisseur de communication réseau/série (20) pour convertir de façon appropriée un format de données vers des normes de communication série basées sur le standard UART dudit réseau interne et dudit contrôleur de produit (C1-Cn) dudit appareil domestique correspondant (H1-Hn) de telle façon que ledit appareil domestique correspondant transmet et reçoit les données vers/depuis ledit réseau interne ; et
une mémoire (21) pour stocker ladite adresse IP privée ou ledit numéro de port attribué audit appareil domestique correspondant (H1-Hn) par lesdits moyens de partage IP (10) ;
une interface réseau (22) pour transférer des données au format converti de façon appropriée vers ladite norme dudit réseau interne par ledit convertisseur de communication réseau/série (20), vers ledit réseau interne, et transférer des données associées audit appareil domestique correspondant (H1-Hn) depuis ledit réseau interne vers ledit convertisseur de communication réseau/série (20) ;
une unité de stockage (23) de données interface utilisateur (UI) pour stocker des données UI, de sorte que ladite unité (23) de stockage de données interface utilisateur (UI) est adaptée à envoyer les données UI stockées vers un dispositif de calcul interne, ledit dispositif de calcul interne étant connecté audit réseau interne pour envoyer des ordres de commande à ladite pluralité d'appareils domestiques, et exécuter ledit programme UI en réponse auxdites données UI qui lui sont envoyées, de sorte que lesdits ordres de commande peuvent être injectés via ledit dispositif de calcul interne.

2. Système de mise en réseau d'appareils domestiques selon la revendication 1, dans lequel lesdits moyens de mise en réseau incluent :
une passerelle (G) faisant office d'entrée vers ledit réseau interne ; et
un noeud de réseau (H) pour transmettre et recevoir des données entre ladite passerelle (G) et lesdits moyens de partage IP (10).

3. Système de mise en réseau d'appareils domestiques selon la revendication 1, dans lequel lesdits processeurs de communication (T1-Tn) sont adaptés à échanger continuellement des données avec lesdits contrôleurs de produits (C1-Cn) pour déterminer si lesdits appareils domestiques correspondants (H1-Hn) fonctionnent normalement.

4. Système de mise en réseau d'appareils domestiques selon la revendication 1, dans lequel ladite mémoire (21) est une mémoire morte.

5. Système de mise en réseau d'appareils domestiques selon la revendication 1, dans lequel chacun desdits processeurs de communication (T1-Tn) inclut en outre une interface réseau (22) pour transférer des données, délivrées depuis ledit contrôleur de produits (C1-Cn) dudit appareil domestique correspondant (H1-Hn) et ensuite converties de façon appropriée au format de ladite norme dudit réseau interne par ledit convertisseur de communication réseau/série (20), vers ledit réseau interne, et pour transférer des données associées audit appareil domestique correspondant (H1-Hn) depuis ledit réseau interne vers ledit convertisseur de communication réseau/série (20).

6. Système de mise en réseau d'appareils domestiques selon la revendication 5, dans lequel chacun desdits processeurs de communication (T1-Tn) inclut en outre un contrôleur de réseau interne pour gérer la transmission et la réception de données via ledit réseau interne par ladite pluralité d'appareils domestiques (H1-Hn).

7. Système de mise en réseau d'appareils domestiques selon la revendication 5, dans lequel l'unité de stockage (23) de données interface utilisateur (UI) est adaptée à stocker des données UI pour l'exécution d'un programme UI approprié à la commande de ladite pluralité d'appareils domestiques (H1-Hn) connectés audit réseau interne.

8. Système de mise en réseau d'appareils domestiques selon la revendication 7, dans lequel ladite unité de stockage (23) de données UI est adaptée à envoyer les données UI stockées à un dispositif de calcul externe, ledit dispositif de calcul externe ayant accès auxdits moyens de partage IP (10) via ledit réseau externe pour commander lesdits appareils domestiques (H1-Hn) connectés audit réseau interne, et exécutant ledit programme UI en réponse auxdites données UI qui lui sont envoyées, de sorte que des ordres de commande peuvent être entrés via ledit dispositif de calcul externe.

9. Procédé pour commander un système de mise en réseau d'appareils domestiques, comprenant les étapes consistant à :
a) attribuer une adresse publique IP à des moyens de partage IP (10), lesdits moyens de partage IP (10) attribuant des adresses IP privées ou des numéros de ports respectivement à une pluralité d'appareils domestiques (H1-Hn) connectés à un réseau interne d'un système de réseau domestique ;
b) connecter (S1) un dispositif de calcul auxdits moyens de partage IP (10) pour permettre audit dispositif de calcul d'entrer un ordre de commande à un appareil spécifique de ladite pluralité d'appareils domestiques connectés audit réseau interne ;
c) connecter (S5, S6, S7) lesdits moyens de partage IP (10) à ladite pluralité d'appareils domestiques (H1-Hn) connectés audit réseau interne lorsque ledit dispositif de calcul est connecté auxdits moyens de partage IP (10) lors de ladite étape b) ;
**caractérisé par** les étapes consistant à :
d) transférer (S8) des données UI au dispositif de calcul, ledit dispositif de calcul exécutant (S9) un programme UI en réponse à des données UI qui lui sont envoyées, et injecter (S 10) ledit ordre de commande via ledit programme UI exécuté par ledit dispositif de calcul vers un appareil de ladite pluralité d'appareils domestiques avec lesdites adresses privées IP ou les numéros de ports attribués par lesdits moyens de partage IP (10) connectés à ladite étape c) ; et
e) commander (S 13) un appareil correspondant desdits appareils domestiques (H1-Hn) en réponse audit ordre de commande injecté à ladite étape b) quand l'adresse IP privée ou le numéro de port de l'ordre de commande transféré est la/le même (S 12) que l'adresse IP privée ou le numéro de port de l'appareil domestique correspondant.

10. Procédé selon la revendication 9, comprenant en outre l'étape consistant à :
f) permettre auxdits moyens de partage IP (10) d'attribuer lesdites adresses IP privées ou lesdits numéros de ports respectivement à ladite pluralité d'appareils domestiques (H1-Hn) avant d'exécuter ladite étape b).

11. Procédé selon la revendication 9, dans lequel ladite étape b) inclut les opérations consistant à :
b-1) permettre audit dispositif de calcul d'accéder auxdits moyens de partage IP (10) en utilisant ladite adresse publique IP qui leur est attribuée ;
b-2) déterminer (S2) si une identification (ID) et un mot de passe entrés via ledit dispositif de calcul tout en accédant auxdits moyens de partage IP (10) sont valides ; et
b-3) connecter ledit dispositif de calcul auxdits moyens de partage IP (10) si l'on détermine à ladite opération b-2) que l'identification ID et le mot de passe entrés sont valides.

12. Procédé selon la revendication 9, dans lequel ladite étape c) inclut les opérations consistant à :
c-1) permettre auxdits moyens de partage IP (10) de fixer une adresse IP privée ou un numéro de port d'un appareil domestique (H1-Hn) à connecter, parmi lesdites adresses IP privées ou les numéros de ports attribués à ladite pluralité d'appareils domestiques ;
c-2) connecter lesdits moyens de partage IP (10) audit appareil domestique avec ladite adresse IP privée ou ledit numéro de port fixé(e) à ladite opération c-1) ; et
c-3) déterminer (S6) si lesdits moyens de partage IP (10) ont été connectés à tous les appareils de ladite pluralité d'appareils domestiques (H1-Hn) connectés audit réseau interne et, si lesdits moyens de partage IP (10) n'ont pas été connectés à tous les appareils de ladite pluralité d'appareils domestiques connectés audit réseau interne, incrémenter ladite adresse IP privée ou ledit numéro de port fixé(e) à ladite opération c-1) d'une unité, et retourner ensuite à ladite opération c-2).

13. Procédé selon la revendication 9, comprenant en outre, après ladite étape b) et avant ladite étape d), les étapes consistant à :
f) stocker des données UI pour exécution d'un programme UI dans un processeur de communication (T1) et envoyer (S8) les données UI stockées audit dispositif de calcul connecté à ladite étape b), ledit programme UI étant exécuté (S9) pour injecter (S10) ledit ordre de commande à ladite pluralité d'appareils domestiques, ledit processeur de communication (T1) transmettant et recevant des données entre ledit réseau interne et lesdits appareils domestiques ; et
g) permettre audit dispositif de calcul d'exécuter ledit programme UI en réponse auxdites données UI qui lui sont envoyées.
